Europäisches Patentamt

European Patent Office

Office européen des brevets

(19)

(11) **EP 0 853 648 B1**

(12) **FASCICULE DE BREVET EUROPEEN**

(45) Date de publication et mention
de la délivrance du brevet:
**09.06.1999 Bulletin 1999/23**

(51) Int Cl.⁶: **C09C 1/00**, C22B 7/02

(21) Numéro de dépôt: **96927109.7**

(22) Date de dépôt: **30.07.1996**

(86) Numéro de dépôt international:
**PCT/FR96/01202**

(87) Numéro de publication internationale:
**WO 97/06215 (20.02.1997 Gazette 1997/09)**

(54) **PROCEDE DE PREPARATION DE PIGMENTS MINERAUX, PIGMENTS MINERAUX AINSI OBTENUS, ET INSTALLATION POUR LA MISE EN OEUVRE D'UN TEL PROCEDE**

VERFAHREN ZUR HERSTELLUNG VON MINERALPIGMENTEN, AUF DIESE WEISE ERHALTENDE MINERALPIGMENTE, UND ANLAGE ZUR DURCHFÜHRUNG EINES SOLCHEN VERFAHRENS

METHOD FOR PREPARING INORGANIC PIGMENTS, RESULTING INORGANIC PIGMENTS, AND APPARATUS THEREFOR

(84) Etats contractants désignés:
**AT BE CH DE DK ES FI FR GB GR IE IT LI LU MC NL PT SE**

(30) Priorité: **04.08.1995 FR 9509548**

(43) Date de publication de la demande:
**22.07.1998 Bulletin 1998/30**

(73) Titulaire: **RECUPAC**
**38570 Le Cheylas (FR)**

(72) Inventeurs:
• **ROUX, Gilles**
**F-38210 St-Quentin-sur-Isère (FR)**
• **TEDJAR, Farouk**
**F-38000 Grenoble (FR)**

(74) Mandataire: **Derambure, Christian et al**
**Bouju Derambure Bugnion,**
**52, rue de Monceau**
**75008 Paris (FR)**

(56) Documents cités:
WO-A-89/04811          DE-A- 3 831 838
GB-A- 1 568 362          GB-A- 1 600 022

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un procédé de préparation de pigments minéraux. Plus particulièrement, l'invention concerne un procédé de préparation de pigments minéraux par traitement de poussières d'aciéries, notamment électriques. L'invention concerne également les pigments minéraux ainsi obtenus, ainsi qu'une installation pour la mise en oeuvre d'un tel procédé.

L'invention trouve en particulier une application dans le traitement des poussières d'aciéries et notamment dans le cas de poussières d'aciéries électriques.

La production d'acier à l'aide de four à arc électrique s'accompagne de la formation d'environ 20 kg de poussière par tonne d'acier produit.

Ces poussières résultent au moins de deux réactions : selon une première réaction, les métaux les plus volatiles passent en phase vapeur à la température de fonctionnement des fours. Sous l'effet de l'aspiration à l'air, ils sont alors oxydés et refroidis, et se retrouvent soit sous forme d'oxydes libres, soit sous forme de structure mixte avec les oxydes de fer.

Selon une seconde réaction, au-dessus du bain d'acier en ébullition, de fines particules de fer sont dispersées dans la phase vapeur et entraînées par l'aspiration d'air. Dans ce courant d'air, elles sont refroidies et, sous l'action de l'oxygène de l'air, transformées en oxyde supérieur. L'interaction entre ces oxydes et les métaux lourds peut conduire à la formation de composés type spinelle $MFe_2O_4$ (dans lesquelles M = Zn, Ni, Mn ou Cd). Si M = Fe, la phase est composée de magnétite.

Les poussières d'aciéries électriques contiennent donc des quantités variables en éléments majoritaires comme le fer, le zinc, le calcium et le silicium, sous forme d'oxydes simples ou mixtes et des éléments minoritaires comme le cuivre, le manganèse, le chrome, le cadmium, le plomb et des chlorures. Les poussières sont considérées comme toxiques en raison du relarguage de métaux lourds par lixiviation et relèvent donc des décharges de classe 1. A ce propos, la réglementation européenne prévoit qu'à partir de 2002, seuls les déchets réputés et confirmés ultimes seront admis dans les décharges de classe 1.

Deux types de procédé de recyclage ont été envisagés pour le traitement des poussières d'aciéries électriques.

Une première voie consiste à effectuer des réductions, à des températures diverses selon les procédés, pour volatiliser les métaux lourds et à réinjecter la fraction ferreuse dans les fours de production de l'acier.

Ainsi, le document EP-A-336 923 propose de traiter les poussières d'aciéries dans un four à fusion de fonte après transformation en boulettes ; le document EP-A-441 052 propose un traitement thermique entre 1.200 et 1.700°C par addition de produits réducteurs ; le document WO-A-91 12 210 décrit un procédé de traitement des poussières d'aciérie dans un four de réduction de fonte, les métaux lourds sont alors récupérés par condensation à partie des gaz chauds ; le document EP-A-453 151 décrit un procédé de traitement des poussières sous forme de boulettes par un agent sélectivement réducteur de l'oxyde de fer ; le document FR-A-2 666 592 décrit un dispositif d'extraction des métaux volatiles agissant par oxydation ; le document WO-A-3 696 193 décrit un four à arc spécialement conçu pour la réduction des poussières contenant des oxydes ; le document EP-A-6 538 717 concerne un procédé pyrométallurgique complété par une étape de distillation des métaux lourds à 1' état liquide ; et le document EP-A-551 992 décrit un procédé de récupération des métaux valorisables, à partir de poussières d'aciérie par induction et volatisation des métaux valorisables.

Une seconde voie consiste à orienter les poussières vers une utilisation où elles sont rendues inertes par des moyens divers en vue de l'utilisation comme matériau de construction ou d'appoint.

Ainsi, on connaît du document EP-A-402 746 un procédé de recyclage par intégration des poussières d'aciérie dans une argile pour un matériau de remblai de mine. Le document WO-A-91 122 10 propose, quant à lui, l'utilisation des poussières d'aciérie pour le traitement des eaux d'égout moyennant l'addition d'un agent floculent.

Enfin, le document FR-A-2 689 881 décrit un procédé de fabrication de briques dont les propriétés sont améliorées par addition de poussières d'aciérie électrique préalablement calcinées à la température de volatilisation de métaux lourds contenus dans lesdites poussières.

Un premier objet de la présente invention est de proposer un procédé de préparation de pigments minéraux à partir des poussières d'aciéries, notamment électriques.

Un autre objet de la présente invention est de proposer un tel procédé qui permette non seulement de valoriser la fraction la plus abondante des poussières d'aciérie, mais également de neutraliser les métaux lourds libres contenus dans lesdites poussières.

Un autre objet de la présente invention est de proposer un tel procédé qui permette de traiter à la fois les poussières dites "acides" ainsi que les poussières dites "basiques".

Un autre objet de la présente invention est de proposer un tel procédé permettant d'isoler la ferrite de zinc à partir des poussières d'aciérie à des fins d'application comme pigment colorant avec une nuance analogue aux couleurs obtenues au moyen de ferrite de zinc, seul ou associé à d'autres oxydes de fer.

A cet effet, l'invention propose un procédé de préparation de pigments minéraux, dans lequel on utilise des poussières d'aciérie, notamment électrique, comme produit de départ.

Plus particulièrement, l'invention propose un procédé de préparation de pigments minéraux à partir de poussières d'aciéries, notamment électriques, caractérisé en ce qu'il comprend les étapes selon lesquelles :

a) on sépare les poussières en deux fractions, une fraction comportant des éléments magnétiques et une fraction comportant des éléments non magnétiques ;
b) on soumet ladite fraction non magnétique à une réaction de lixiviation basique pour dissoudre la fraction de zinc qui ne serait pas engagée sous forme de spinelle, la silice, le plomb, une fraction du manganèse ;
c) on rince jusqu'à la neutralisation et on sépare la charge solide ainsi obtenue ;
d) on calcine à une température comprise entre 450 et 650°C la charge ainsi obtenue ;
e) on traite la charge calcinée à l'acide sulfurique en présence d'un catalyseur de dissolution des oxydes de fer formés lors de l'étape de calcination et des métaux lourds autres que le zinc ;
f) on recueille les pigments minéraux ;
g) on utilise les solutions issues de c) et e) pour précipiter d'autres pigments.

Selon l'invention, on sépare les poussières en deux fractions, respectivement magnétique et non magnétique, en :

- soumettant les poussières à une attrition dans l'eau ;
- classant hydrauliquement la charge ainsi obtenue ;
- soumettant la fraction la plus fine de la charge classée hydrauliquement à une séparation magnétique en phase humide.

Le procédé de préparation de pigments de minéraux selon l'invention présente également les caractéristiques suivantes, prises seules, en combinaison ou optionnellement : on classe hydrauliquement la charge issue de l'étape d'attrition dans l'eau au moyen d'un hydraucyclone ; la fraction soumise à la séparation magnétique en phase humide correspond à une granulométrie supérieure à de l'ordre de 40 micromètres ; la réaction de lixiviation basique est effectuée en présence d'un agent rédox ; l'agent rédox est choisi dans le groupe constitué par des composés oxydants en milieu alcalin ; plus particulièrement, l'agent rédox est le peroxyde d'hydrogène ; l'étape c) est réalisée au moyen d'une essoreuse horizontale ; l'étape de calcination est effectuée dans un four à lit fluidisé ; le catalyseur utilisé dans l'étape de traitement à l'acide sulfurique est un composé oxydo-réducteur ; le composé oxydo-réducteur est choisi dans le groupe constitué par les dérivés d'hydrazinium ou de chlorydrate d'hydroxylamine ; de manière préférée, le composé oxydo-réducteur est le sulfate d'hydrazine.

L'invention concerne également les pigments minéraux caractérisés en ce qu'ils sont obtenus par la mise en oeuvre du procédé selon la présente invention.

De tels pigments minéraux sont notamment utilisés comme pigments colorants ou comme additifs pour peinture anticorrosion.

L'invention concerne encore une installation pour la mise en oeuvre d'un procédé de préparation de pigments minéraux, caractérisée en ce qu'elle comprend d'amont en aval et à partir d'une alimentation en poussières d'aciéries, notamment électriques :

- un premier ensemble de postes permettant de séparer les poussières en deux fractions, une fraction comportant des éléments magnétiques et une fraction comportant des éléments non magnétiques ;
- un deuxième ensemble de postes permettant de soumettre ladite fraction non magnétique à une réaction de lixiviation basique afin d'obtenir une boue lavée ;
- un troisième ensemble de postes permettant la calcination de la boue lavée conduisant à une première fraction de pigments ;
- un quatrième ensemble de postes permettant un traitement à l'acide de la boue lavée après calcination pour obtenir une solution claire ;
- un cinquième ensemble de postes permettant un traitement de la solution claire pour obtenir une seconde fraction de pigments minéraux.

Le premier ensemble de postes comprend d'amont en aval au moins une cellule d'attrition alimentée en poussières et fournissant une pulpe évacuée vers au moins une cuve de dilution ; au moins un poste de classification hydraulique dont la sur-verse est traitée dans au moins un séparateur magnétique à voie humide ; au moins une centrifugeuse destinée à séparer les éléments de la fraction non magnétique pour obtenir un clair et une boue.

Dans un mode de réalisation préférée, l'installation de la présente invention comprend deux cellules d'attrition fonctionnant en parallèle.

Le poste de classification hydraulique est un hydrocyclone.

L'installation de la présente invention comprend, en aval de la centrifugeuse une série de résines échangeuses d'ions pour traiter le clair.

L'installation selon l'invention comprend encore au moins un poste d'analyse en ligne d'évaluation des rapports Ca + Mg /Si et Fe/Zn.

Le deuxième ensemble de postes comprend d'amont en aval au moins un réacteur de lixiviation de la boue ; au moins une centrifugeuse pour séparer un clair d'une boue ; au moins une cuve de lavage de la boue pour obtenir une boue lavée.

L'installation selon l'invention comprend en outre, en aval de la centrifugeuse au moins un réacteur de traitement à la chaux du clair ; au moins un réacteur de traitement à la poudre de zinc de la fraction claire provenant du réacteur après réaction et filtration ; au moins un bac tampon destiné à recevoir la solution purifiée provenant du réacteur après réaction et filtration.

Elle comprend encore en aval du bac tampon un électrolyseur.

Le troisième ensemble de postes comprend au moins un four de calcination à lit fuidisé de la boue lavée.

Le quatrième ensemble de postes comprend au moins un réacteur de traitement à l'acide de la boue lavée après calcination ; au moins une centrifugeuse pour séparer une solution claire stockée dans au moins une cuve tampon d'une boue.

Le cinquième ensemble de postes comprend au moins un réacteur de neutralisation de la solution claire stockée dans la cuve tampon par la solution stockée dans le bac tampon et au moins un poste de séchage destiné à sécher la fraction solide provenant du réacteur.

L'invention présente également les caractéristiques suivantes prises en combinaison avec celles exposées ci-dessus, et faites en référence aux dessins annexés dans lesquels :

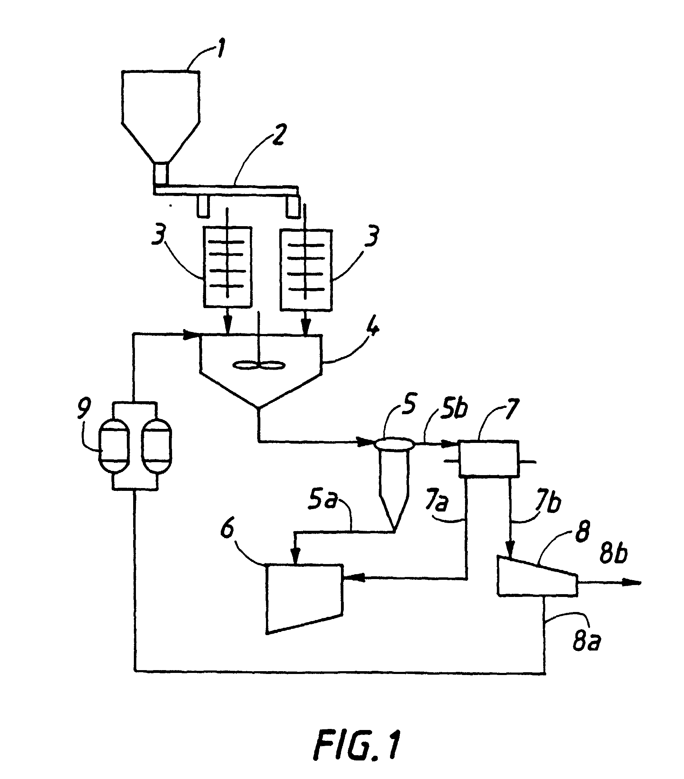

- la figure 1 est une représentation schématique d'un premier ensemble de postes d'une installation conforme à la présente invention ;

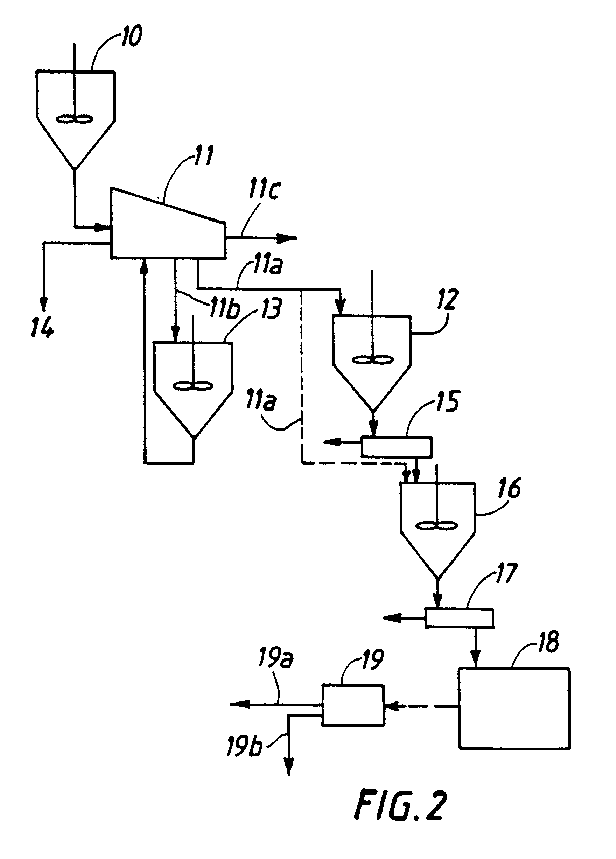

- la figure 2 est une représentation schématique d'un deuxième ensemble de postes d'une installation conforme à la présente invention, celui-ci se situant en aval du premier ensemble ;

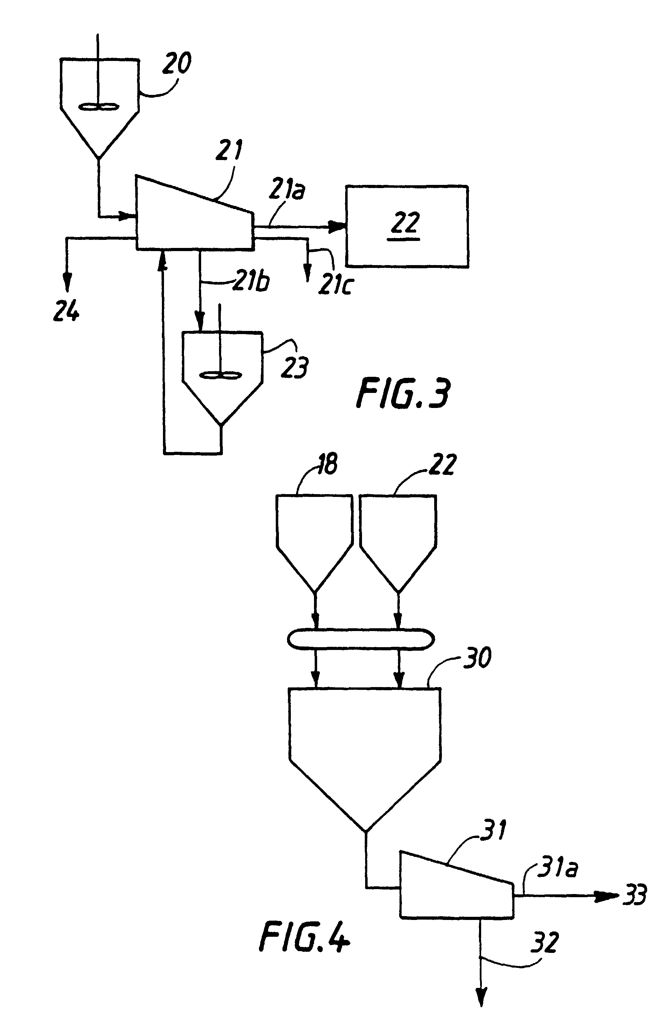

- la figure 3 est une représentation schématique d'un troisième ensemble de poste d'une installation conforme à la présente invention ; celui-ci se situant en aval du deuxième ensemble ;
- la figure 4 est une représentation schématique du cinquième ensemble de postes d'une installation conforme à la présente installation, celui-ci étant situé en aval du quatrième ensemble.

La présente invention concerne donc un procédé de préparation de pigments de minéraux dans lequel on utilise des poussières d'aciérie, notamment électrique, comme produit de départ.

La composition des poussières dépend de la nature du procédé sidérurgique. Si les concentrations en fer et en zinc sont relativement les mêmes d'une aciérie à une autre, le caractère acido-basique varie fortement comme l'illustrent les teneurs en chaux, magnésie et silice. Schématiquement, les différentes poussières peuvent être caractérisées par le rapport R = chaux + magnésie/silice. La composition et la valeur de R pour quatre poussières différentes est reportée dans le tableau suivant :

| Aciérie | Zinc | Fer | CaO+MgO | Silice | R |
|---------|------|-----|---------|--------|-------|
| 1 | 29 | 21 | 4 | 3 | 1,33 |
| 2 | 19 | 22 | 12 | 6 | 2 |
| 3 | 17 | 23 | 15 | 3 | 5 |
| 4 | 13 | 46 | 0,3 | 17 | 0,017 |

L'analyse au microscope à balayage, complété par une analyse ponctuelle par dispersion d'énergie, montre que les poussières résultent d'un mécanisme d'agglomération physique et d'interactions chimiques complexes. L'analyse par diffraction au rayon X sur poudre montre que le spectre s'apparente fortement à celui d'une phase bien définie type ferrite, qui cristallise en réseau spinelle. Le zinc étant un élément majoritaire avec le fer, le composé s'indexe parfaitement comme une ferrite de zinc, $ZnFe_2O_4$ (Franklinite).

Ce type de ferrite est utilisé comme substance de base pour des applications sous forme de pigment. La thermostabilité des ferrites de zinc les fait préférer au mélange d'oxydes de fer dont la stabilité thermique est moins bonne.

Or, dans le processus de formation des poussières d'aciérie, la présence de ferrite est due à l'interaction

ZnO-Fe$_2$O$_3$, à des températures souvent supérieures à 1.000°C.

Selon les différents procédés, la ferrite de zinc est obtenue :

- soit par calcination d'oxydes de zinc et de fer à des températures comprises entre 750 et 1.000°C ;
- soit par coprécipitation d'hydroxydes de fer et de zinc suivie d'une calcination à des températures comprises entre 750 et 1.000°C, et même parfois 1.250°C.

Par ailleurs, les poussières d'aciérie électrique ont des distributions granulométriques très larges, puisqu'elles renferment des fractions comprises entre 1 et 150 µm. Elles ont d'ailleurs une forte tendance à s'agglomérer. Cette propriété exclue donc toute possibilité de tamisage à sec (même un tamisage assisté par ultra-son se révèle infructueux).

L'étude granulométrie d'une poussière d'aciérie électrique montre que la composition chimique des fractions dépend fortement de la granulométrie. Ainsi, les fractions les plus grosses sont les plus riches en fer métal. Comme les poussières résultent également d'agglomération physique de particules de faible taille autour d'un grain central plus gros, seule une attrition dans l'eau permet de désagréger les agglomérats. Ceci facilite avantageusement la séparation de la charge en deux fractions (supérieure et inférieure à de l'ordre de 40 micromètres par exemple).

Ainsi, selon le procédé de la présente invention, les poussières sont tout d'abord soumises à une attrition dans l'eau puis à une classification hydraulique, notamment au moyen d'un hydrocyclone. Après classification hydraulique, la charge subit une séparation magnétique en phase humide. Cette séparation permet la récupération des fractions ferromagnétiques, et notamment les micro-particules de billes d'acier volatilisées dans le four. Elle permet également le rinçage de la charge pour achever l'élimination des sels solubles comme les chlorures.

La charge de granulométrie inférieure à de l'ordre de 40 micromètres est alors traitée par une solution de soude concentrée à chaux, en présence d'un agent rédox qui est avantageusement choisi dans le groupe constitué par les composés oxydants en milieu alcalin. Parmi ceux-ci, le peroxyde d'hydrogène est particulièrement préféré du fait qu'il permet d'éviter la contamination du milieu. L'eau et l'oxygène sont alors les seuls produits obtenus après réaction de H$_2$O$_2$. Cette étape du procédé selon l'invention permet de dissoudre d'une part la fraction du zinc qui ne serait pas engagée sous forme de spinelle, et d'autre part, la silice, le plomb et une fraction du manganèse.

Après ce premier traitement chimique, la charge est rincée jusqu'à neutralisation et est séparée au moyen notamment d'une essoreuse horizontale.

Le solide est alors calciné à une température comprise entre 400 et 650°C dans un four à lit fluidisé pouvant admettre des boues en entrée, et conduisant à une charge calcinée qui sort sous forme de poudre. on évite ainsi un broyage onéreux.

La charge calcinée est ensuite traitée à l'acide sulfurique moyennement concentrée et en présence d'un composé oxydo-réducteur qui va jouer le rôle de catalyseur pour la dissolution des oxydes de fer formés à la calcination et les métaux lourds autres que le zinc. Ce catalyseur est choisi parmi les dérivés d'hydrazinium ou de chlorhydrate d'hydroxylamine en raison du bas potentiel rédox de ces composés. Parmi ceux-ci, le sulfate d'hydrazine est préféré en raison du milieu sulfate. Les seuls produits obtenus après oxydation sont alors l'acide sulfurique et l'azote selon la réaction :

$$N_2H_6SO_4 \rightarrow N_2 + 4H^+ + 4e^- + H_2SO_4$$

L'invention sera maintenant décrite en référence plus particulièrement aux figures qui illustrent une installation conforme à la présente invention.

Cette dernière comprend essentiellement cinq ensembles de postes, ci-après dénommés ensembles A, B, C, D, et E.

Ensemble A : la poussière stockée dans un silo 1 est acheminée via une vis sans fin 2 dans au moins une cellule d'attrition 3. De manière préférée, l'installation de la présente invention comporte deux cellules d'attrition 3 fonctionnant en parallèle. Après attrition, la pulpe est évacuée vers une cuve 4, munie d'une arrivée d'eau et où la densité de la pulpe est abaissée par dilution. La charge est alors envoyée sous pression vers un hydrocyclone 5. La sous-verse 5a part vers un bac de décantation 6 et la sur-verse 5b est traitée dans un séparateur magnétique en voie humide. La fraction magnétique 7a est dirigée vers le bac de décantation 6 et les éléments non magnétiques 7b sont séparés au moyen d'une centrifugeuse horizontale 8. Le clair 8a est traité par une série de résines échangeuses d'ions 9 pour être réutilisées dans la cuve de dilution 4. La boue 8b est soumise à une analyse en ligne pour évaluer le rapport Ca + Mg/Si, ainsi que le rapport Fe/Zn. De la valeur de ces paramètres dépend l'étape suivante. Selon le caractère acide ou basique, la boue 8b est acheminée respectivement vers l'ensemble B1 ou B2.

Ensemble B1 : dans un réacteur 10, chauffé, muni d'une agitation et contenant la solution de soude ainsi que l'agent rédox, on amène la boue 8b obtenue en sortie de l'ensemble A. Au terme de la réaction de lixiviation basique, la pulpe est dirigée vers une centrifugeuse 11. Après essorage, le clair ou liquide de lixiviation 11a est envoyé vers un second réacteur 12, et la boue 11b vers une cuve de lavage 13 munie d'un agitateur, d'une régulation pH et d'une arrivée d'eau acidulée. Après le cycle de lavage, la pulpe de pH comprise entre 7 et 8,5 est essorée en 11. La boue lavée et essorée llc est réservée pour subir le traitement mis en oeuvre dans l'ensemble C, alors que la solution de rinçage est envoyée vers une bâche de stockage 14. Dans le réacteur 12, la liqueur de lixiviation 11a, basique, est traitée à la chaux pour précipiter la silice sous forme de silicate de calcium qui est filtrée en 15 après lavage. La fraction claire est alors traitée dans le réacteur 16 au moyen de poudre de zinc pour cémenter le plomb, le cuivre et le nickel. Les céments sont récupérés après lavage dans le filtre 17, et la solution purifiée est stockée dans un bac tampon 18. Cette solution est destinée à être acheminée vers l'ensemble E.

La succession d'étapes qui viennent d'être décrites sont appliquées à une poussière présentant un caractère acide alors que la succession d'étapes décrites ci-après est destinée à une poussière d'aciérie présentant un caractère basique.

Ensemble B2 : dans un réacteur 10, agité et chauffé et contenant la solution de soude ainsi que l'agent rédox, on amène la boue 8b obtenue en sortie de l'ensemble A. Au terme de la réaction de lixiviation basique, la pulpe est dirigée vers une centrifugeuse 11. Après essorage, le clair ou liqueur de lixiviation 11a est envoyé vers un second réacteur 16 et la boue llb vers une cuve de lavage 13, munie d'un agitateur, d'une régulation pH et d'une arrivée d'eau acidulée. Après le cycle de lavage, la pulpe de pH compris entre 7 et 8,5 est essorée en 11. La boue lavée et essorée llc est réservée pour subir le traitement de l'ensemble C, alors que la solution de lavage est envoyée vers une bâche de stockage 14. Dans le réacteur 16, la liqueur de lixiviation basique lla est traitée au moyen de poudre de zinc pour cémenter le plomb, le cuivre et le nickel. Les céments sont récupérés après lavage dans le filtre 17 et la solution purifiée est stockée dans un bac tampon 18. Ce bac sert à alimenter en continu un électrolyseur 19 dont les électrodes sont en acier inox. La liqueur de sortie passe par un filtre à poche pour récupérer le zinc 19a qui se présente sous forme de poudre spongieuse. La solution claire 19b est envoyée en tête de procédé pour servir à nouveau à l'attaque basique moyennant un réajustement du titre.

Ensemble C (non représenté) : la boue 11c issue du traitement B est envoyée vers un four de calcination à lit fluidisé muni d'un cyclone de classification et de soutirage des fines et d'un dispositif de recirculation des grosses particules via un désintégrateur.

Ensemble D : la boue 11c, après calcination, est mélangée avec une solution acide comprenant le catalyseur, dans un réacteur 20 muni d'un agitateur et d'un chauffage régulé. Après le temps de réaction, la pulpe est envoyée vers la centrifugeuse 21. La solution claire 21a est stockée dans une cuve tampon 22 et la boue 21b est envoyée vers une cuve de lavage 23 munie d'un agitateur, d'une régularisation pH et d'une arrivée d'eau alcaline. Après rinçage, la charge solide 21c est envoyée vers l'étape E alors que la solution de rinçage est dirigée vers une bâche de stockage 24.

Ensemble E : dans cette étape, le traitement se fait dans un réacteur 30 muni d'une agitation, d'une régulation pH et d'une rampe d'insufflation d'air. Le réacteur 30 est rempli de la solution claire 21a issue de l'étape C et stockée dans la cuve tampon 22. La mise au pH désiré est effectuée au moyen de la solution alcaline issue de l'étape B et stockée dans le tampon 18. A la fin de la réaction de précipitation, la fraction solide est séchée en 31 pour donner les pigments 32, alors que la solution 31a est envoyée vers un bloc 33 de traitement des effluents.

Pour traiter les effluents, les solutions de rinçage des étapes B et C, stockées respectivement dans les bâches de stockage 14 et 24, ainsi que la solution 31a provenant de l'étape E sont utilisées pour une auto-neutralisation dans une cuve de décantation munie d'une régulation pH. La solution neutre passe à travers une colonne de résine à échange d'ions pour éliminer les métaux lourds résiduels. Le perméat est alors traité dans une cellule d'électrodialyse à membrane bipolaire pour régénérer l'acide et la base à partir de la solution saline. En fonction de la concentration en sel, la solution peut être avantageusement concentrée sur osmose inverse avant de subir une électrolyse à une seule membrane cationique afin de régénérer la soude concentrée d'une part, et une solution d'acide et de sel conjugué d'autre part. La soude concentrée ainsi régénérée peut être avantageusement réutilisée au niveau de l'ensemble B.

L'invention sera maintenant décrite au moyen d'exemples donnés à titre non limitatif.

Exemple 1 : cas d'une poussière acide :

500g de poussières sont soumises à une attrition pendant 15mn dans 250 ml d'eau. Après attrition, la charge est diluée avec 2,5 litres d'eau et soumise à une classification hydraulique. 14 % de la charge constitue le refus à 42 microns. La sur-verse (fraction la plus fine) est soumise à une séparation magnétique basse intensité. Sous un champ de 1.500 gauss et un débit d'eau de rinçage de 12 l/mn, la fraction magnétique représente 5 % de la charge. La composition de la charge non magnétique après attrition est : Fe 41,5 %, Zn 11,04 %, Pb 0,4 %, Mn 2,6 %, Si 16,68 %.

200g de cette charge non magnétique sont soumis à une lixiviation basique au moyen de soude 30 % en poids en présence de $H_2O_2$ à 90°C pendant 4 heures. Après filtration, la fraction solide est lavée jusqu'à neutralisation puis séchée à 100°C : 168,5 g sont récupérés. Sa composition est Fe 46,9 %, Zn 14,6 %. La charge après traitement alcalin est alors calcinée à 400°C pendant 4 heures : 149,5g sont récupérés puis traités à l'acide sulfurique 10% pendant 2 heures à 50°C en présence d'un catalyseur de réduction du fer (III). 116,9 g sont finalement obtenus. L'aluminium et le phosphore contenus initialement dans la poussière jouent un rôle bénéfique au niveau de la coloration du produit final et particulièrement comme agent éclaircissant. La poudre obtenue est rincée abondamment à l'eau puis séchée à 100°C. Le degré illuminant de l'échantillon obtenu est L*=40.7, a*=17.07 et b*=29.02.

1,5 litres de liqueur de traitement alcalin sont traités par 15 g de chaux sous agitation à 60°C pendant 20 mn. Après décantation, le précipité formé de silicate de calcium est séparé et le clair est alors traité par de la poudre de zinc sous agitation pour cémenter le plomb et le cuivre. La solution finale contient 9,3 g de zinc sous forme de zincate de sodium. 2,3 litres de liqueur acide sont traités par de la poudre de zinc pour cémenter le cuivre et le nickel. Après ce traitement, la solution contient 7g de zinc, 1,2 g de manganèse et 15 g de fer. Cette solution est partiellement neutralisée à 60°C jusqu'à pH 5,2 tout en maintenant un barbotage d'air à 1.500 l/h. Le précipité obtenu est lavé et séché à 250°C dans un sécheur à air circulant.

Exemple 2 : cas d'une poussière basique :

500 g de poussière sont traités comme dans l'exemple 1 jusqu'à l'étape de lixiviation basique. 200 g de cette charge non magnétique sont soumis à une lixiviation basique au moyen de soude 30 % en poids à 90°C pendant 4 heures. Après filtration, la fraction solide est lavée jusqu'à neutralisation. La liqueur obtenue est traitée à la poudre de zinc pour cémenter le plomb puis soumise à une électrolyse continue dans une cellule dont les électrodes sont en acier inoxydable (par exemple : "hastelloy", marque déposée). La liqueur appauvrie en ions zinc est réutilisée pour l'attaque basique. La charge solide est soumise à une attaque acide dans les mêmes conditions que pour l'exemple 1, mais à un degré d'avancement plus important et en présence du même catalyseur de réduction du fer (III). A la fin de l'attaque, la fraction insoluble contient essentiellement de la silice, des silicates et des sulfates de calcium et de magnésium.

Après séparation du précipité, la solution est maintenue à 70°C sous barbotage d'air. Une solution de soude est ajoutée jusqu'à pH 5,2 pour précipiter un oxyhydroxyde de fer jaune. Le produit final est essoré, lavé et calciné à 250°C.

## Revendications

1. Procédé de préparation de pigments minéraux à partir de poussières d'aciéries, notamment électriques, caractérisé en ce qu'il comprend les étapes selon lesquelles :

   a) on sépare les poussières en deux fractions, une fraction comportant des éléments magnétiques et une fraction comportant des éléments non magnétiques ;
   b) on soumet ladite fraction non magnétique à une réaction de lixiviation basique pour dissoudre la fraction de zinc qui ne serait pas engagée sous forme de spinelle, la silice, le plomb, une fraction du manganèse ;
   c) on rince jusqu'à la neutralisation et on sépare la charge solide ainsi obtenue ;
   d) on calcine à une température comprise entre 450 et 650°C la charge ainsi obtenue ;
   e) on traite la charge calcinée à l'acide sulfurique en présence d'un catalyseur de dissolution des oxydes de fer formés lors de l'étape de calcination et des métaux lourds autres que le zinc ;
   f) on recueille les pigments minéraux ;
   g) on utilise les solutions issues de c) et e) pour précipiter d'autres pigments.

2. Procédé de préparation de pigments minéraux selon la revendication 1, caractérisé en ce qu'on sépare les poussières en deux fractions, respectivement magnétique et non magnétique, en :

   - soumettant les poussières à une attrition dans l'eau ;
   - classant hydrauliquement la charge ainsi obtenue ;
   - soumettant la fraction la plus fine de la charge classée hydrauliquement a une séparation magnétique en phase humide.

3. Procédé de préparation de pigments minéraux selon la revendication 1 ou 2, caractérisé en ce qu'on classe hydrauliquement la charge issue de l'étape d'attrition dans l'eau au moyen d'un hydrocyclone.

4. Procédé de préparation de pigments minéraux selon l'une quelconque des revendications 1 à 3, caractérisé en ce que la fraction soumise à la séparation magnétique en phase humide correspond à une granulométrie supérieure à de l'ordre de 40 micromètres.

**5.** Procédé de préparation de pigments minéraux selon l'une quelconque des revendication 1 à 4, caractérisé en ce que la réaction de lixiviation basique est effectuée en présence d'un agent rédox.

**6.** Procédé de préparation de pigments minéraux selon la revendication 5, caractérisé en ce que l'agent rédox est choisi dans le groupe constitué par des composés oxydants en milieu alcalin.

**7.** Procédé de préparation de pigments minéraux selon la revendication 5 ou 6, caractérisé en ce que l'agent rédox est le peroxyde d'hydrogène.

**8.** Procédé de préparation de pigments minéraux selon l'une quelconque des revendications 1 à 7, caractérisé en ce que l'étape c) est réalisée au moyen d'une essoreuse horizontale.

**9.** Procédé de préparation de pigments minéraux selon l'une quelconque des revendications 1 à 8, caractérisé en ce que l'étape de calcination est effectuée dans un four à lit fluidisé associé à un désintégrateur.

**10.** Procédé de préparation de pigments minéraux selon l'une quelconque des revendications 1 à 9, caractérisé en ce que le catalyseur utilisé dans l'étape de traitement à l'acide sulfurique est un composé oxydo-réducteur.

**11.** Procédé de préparation de pigments minéraux selon la revendication 10, caractérisé en ce que le composé oxydo-réducteur est choisi dans le groupe constitué par les dérivés d'hydrazinium ou de chlorydrate d'hydroxylamine.

**12.** Procédé de préparation de pigments minéraux selon la revendication 10 ou 11, caractérisé en ce que le composé oxydo-réducteur est le sulfate d'hydrazine.

**13.** Pigments minéraux caractérisés en ce qu'ils sont obtenus par la mise en oeuvre du procédé selon l'une quelconque des revendications 1 à 12.

**14.** Installation pour la mise en oeuvre d'un procédé de préparation de pigments minéraux selon l'une quelconque des revendications 1 à 12, caractérisée en ce qu'elle comprend d'amont en aval et à partir d'une alimentation (1) en poussières d'aciéries, notamment électriques :

- un premier ensemble de postes (3,4,5,7,8) permettant de séparer les poussières en deux fractions, une fraction comportant des éléments magnétiques et une fraction comportant des éléments non magnétiques ;
- un deuxième ensemble de postes (10,11,13) permettant de soumettre ladite fraction non magnétique à une réaction de lixiviation basique afin d'obtenir une boue lavée (11c) ;
- un troisième ensemble de postes permettant la calcination de la boue lavée (11c), conduisant à une première fraction de pigments ;
- un quatrième ensemble de postes (20,21,22) permettant un traitement à l'acide de la boue lavée (11c) après calcination pour obtenir une solution claire (21a) ;
- un cinquième ensemble de postes (30,31) permettant un traitement de la solution claire (21a) pour obtenir une seconde fraction de pigments minéraux (32).

**15.** Installation selon la revendication 14, caractérisée en ce que le premier ensemble de postes (3,4,5,7,8) comprend d'amont en aval au moins une cellule d'attrition (3) alimentée en poussières et fournissant une pulpe évacuée vers au moins une cuve de dilution (4) ; au moins un poste de classification hydraulique (5) dont la sur-verse (5b) est traitée dans au moins un séparateur magnétique à voie humide (7) ; au moins une centrifugeuse (8) destinée à séparer les éléments (7b) de la fraction non magnétique pour obtenir un clair (8a) et une boue (8b).

**16.** Installation selon la revendication 14 ou 15, caractérisée en ce qu'elle comprend deux cellules d'attrition (3) fonctionnant en parallèle.

**17.** Installation selon l'une quelconque des revendications 14 à 16, caractérisée en ce que le poste de classification hydraulique (5) est un hydrocyclone.

**18.** Installation selon l'une quelconque des revendications 14 à 17, caractérisée en ce qu'elle comprend, en aval de la centrifugeuse (8) une série de résines échangeuses d'ions (9) pour traiter le clair (8a).

**19.** Installation selon l'une quelconque des revendications 14 à 18 caractérisée en ce qu'elle comprend au moins un poste d'analyse en ligne d'évaluation des rapports Ca + Mg /Si et Fe/Zn.

20. Installation selon l'une quelconque des revendications 14 à 19, caractérisée en ce que le deuxième ensemble de postes (10,11,13) comprend d'amont en aval au moins un réacteur de lixiviation (10) de la boue (8b) ; au moins une centrifugeuse (11) pour séparer un clair (11a) d'une boue 11(b) ; au moins une cuve de lavage (13) de la boue (11b) pour obtenir une boue lavée (11c).

21. Installation selon l'une quelconque des revendication 14 à 20 caractérisée en ce qu'elle comprend en outre, en aval de la centrifugeuse (11) au moins un réacteur (12) de traitement à la chaux du clair (11a) ; au moins un réacteur (16) de traitement à la poudre de zinc de la fraction claire provenant du réacteur (12) après réaction et filtration ; au moins un bac tampon (18) destiné à recevoir la solution purifiée provenant du réacteur (16) après réaction et filtration.

22. Installation selon l'une quelconque des revendications 14 à 21, caratérisée en ce qu'elle comprend en outre en aval du bac tampon (18) un électrolyseur (19).

23. Installation selon l'une quelconque des revendications 14 à 22, caractérisée en ce que le troisième ensemble de postes comprend au moins un four de calcination à lit fuidisé de la boue lavée (11c).

24. Installation selon l'une quelconque des revendications 14 à 23, caractérisée en ce que le quatrième ensemble de postes (20,21,22) comprend au moins un réacteur (20) de traitement à l'acide de la boue lavée (11c) après calcination ; au moins une centrifugeuse (21) pour séparer une solution claire (21a) stockée dans au moins une cuve tampon (22) d'une boue (21b).

25. Installation selon l'une quelconque des revendications 14 à 24, caractérisée en ce que le cinquième ensemble de postes (30, 31) comprend au moins un réacteur (30) de neutralisation de la solution claire (21a) stockée dans la cuve tampon (22) par la solution stockée dans le bac tampon (18) et au moins un poste de séchage (31) destiné à sécher la fraction solide provenant du réacteur (30).

26. Utilisation de pigments minéraux selon la revendication 13 comme pigments colorants.

27. Utilisation de pigments minéraux selon la revendication 13, comme additifs pour peinture anticorrosion.

**Patentansprüche**

1. Aufbereitungsverfahren von Mineralpigmenten ab Stahlwerkstaub, insbesondere aus Elektrostahlwerken, dadurch gekennzeichnet, dass es die Etappen umfasst, nach denen man :

   a) den Staub in zwei Fraktionen unterteilt, eine Fraktion mit magnetischen Elementen und eine Fraktion mit nicht magnetischen Elementen ;

   b) die besagte nicht magnetische Fraktion einer basischen Laugungsreaktion unterzieht, um die Zinkfraktion, die nicht in Form von Spinell vorliegt, die Kieselerde, das Blei, eine Manganfraktion aufzulösen ;

   c) die so erhaltene Festmasse bis zur Neutralisierung spült und trennt ;

   d) die so erhaltene Masse bei einer Temperatur zwischen 450 und 650°C kalziniert ;

   e) die kalzinierte Masse mit Schwefelsäure behandelt, gemeinsam mit einem Auflösungskatalysator der bei der Kalzinierungsetappe entstandenen Eisenoxide und der Schwermetalle ausser dem Zink ;

   f) die Mineralpigmente auffängt ;

   g) die aus c) und e) entstandenen Lösungen verwendet, um andere Pigmente auszufällen.

2. Aufbereitungsverfahren von Mineralpigmenten nach Anspruch 1, dadurch gekennzeichnet, dass man den Staub in eine magnetische und eine nicht magnetische Fraktion unterteilt, indem man :

- den Staub einer gegenseitigen Zerreibung in Wasser aussetzt ;

- die so erhaltene Masse hydroklassiert ;

- die nach der Hydroklassierung feinste Fraktion der Masse einer magnetischen Trennung in nasser Phase aussetzt.

3. Aufbereitungsverfahren von Mineralpigmenten nach Anspruch 1 oder 2, dadurch gekennzeichnet, dass man die aus der Zerreibungsetappe in Wasser mittels eines Hydrozyklons gewonnene Masse hydroklassiert.

4. Aufbereitungsverfahren von Mineralpigmenten nach einem der Ansprüche 1 bis 3, dadurch gekennzeichnet, dass die der magnetischen Trennung in nasser Phase unterworfene Fraktion einer grösseren Granulometrie als etwa 40 Mikrometern entspricht.

5. Aufbereitungsverfahren von Mineralpigmenten nach einem der Ansprüche 1 bis 4, dadurch gekennzeichnet, dass die basische Laugungsreaktion gemeinsam mit einem Redoxmittel durchgeführt wird.

6. Aufbereitungsverfahren von Mineralpigmenten nach Anspruch 5, dadurch gekennzeichnet, dass das Redoxmittel in der Gruppe gewählt wird, die aus Oxidationsmittel in alkalihaltigem Milieu besteht.

7. Aufbereitungsverfahren von Mineralpigmenten nach Anspruch 5 oder 6, dadurch gekennzeichnet, dass das Redoxmittel Wasserstoffperoxid ist.

8. Aufbereitungsverfahren von Mineralpigmenten nach einem der Ansprüche 1 bis 7, dadurch gekennzeichnet, dass die Etappe c) mittels einer Horizontalzentrifuge durchgeführt wird.

9. Aufbereitungsverfahren von Mineralpigmenten nach einem der Ansprüche 1 bis 8, dadurch gekennzeichnet, dass die Kalzinationsetappe in einem Wirbelbettofen durchgeführt wird, dem ein Desintegrator angeschlossen ist.

10. Aufbereitungsverfahren von Mineralpigmenten nach einem der Ansprüche 1 bis 9, dadurch gekennzeichnet, dass der bei der Schwefelsäure-Behandlungsetappe verwendete Katalysator eine Oxidoreduktionsverbindung ist.

11. Aufbereitungsverfahren von Mineralpigmenten nach Anspruch 10, dadurch gekennzeichnet, dass die Oxidoreduktionsverbindung in der Gruppe gewählt wird, die aus Hydrazin- oder Hydroxylamin-Chlorhydrat-Derivaten besteht.

12. Aufbereitungsverfahren von Mineralpigmenten nach Anspruch 10 oder 11, dadurch gekennzeichnet, dass die Oxidoreduktionsverbindung Hydrazinsulfat ist.

13. Mineralpigmente, dadurch gekennzeichnet, dass sie durch die Umsetzung des Verfahrens nach einem der Ansprüche 1 bis 12 gewonnen werden.

14. Anlage für die Umsetzung eines Aufbereitungsverfahrens von Mineralpigmenten nach einem der Ansprüche 1 bis 12, dadurch gekennzeichnet, dass sie von oben nach unten und ab einer Beschickungsvorrichtung (1) mit Staub aus Stahlwerken, insbesondere elektrischen, umfasst :

- eine erste Postengruppe (3, 4, 5, 7, 8), um den Staub in zwei Fraktionen zu teilen, eine Fraktion mit magnetischen Elementen und eine Fraktion mit nicht magnetischen Elementen ;

- eine zweite Postengruppe (10, 11, 13), um die besagte nicht magnetische Fraktion einer basischen Laugungsreaktion zu unterwerfen, um einen gewaschenen Schlamm (11c) zu erhalten ;

- eine dritte Postengruppe zum Kalzinieren des gewaschenen Schlamms (11c), was zu einer ersten Pigmentfraktion führt ;

- eine vierte Postengruppe (20, 21, 22) für eine Säurebehandlung des gewaschenen Schlamms (11c) nach der Kalzinierung, um eine helle Lösung (21a) zu erhalten ;

- eine fünfte Postengruppe (30, 31) für eine Behandlung der hellen Lösung (21a), um eine zweite Mineralpigmentfraktion (32) zu erhalten.

15. Anlage nach Anspruch 14, dadurch gekennzeichnet, dass die erste Postengruppe (3, 4, 5, 7, 8) von oben nach unten mindestens eine mit Staub versorgte Zerreibungszelle (3) umfasst, die eine in zumindest ein Verdünnungsgefäss (4) transportierte Pulpe liefert ; mindestens einen Hydroklassierungsposten (5), dessen Überlauf (5b) in mindestens einem Flüssigmagnetabscheider (7) behandelt wird ; mindestens eine Zentrifuge (8), um die Elemente (7b) der nicht magnetischen Fraktion abzutrennen und eine helle Lösung (8a) und einen Schlamm (8b) zu erhalten.

16. Anlage nach Anspruch 14 oder 15, dadurch gekennzeichnet, dass sie zwei parallel funktionierende Zerreibungszellen (3) umfasst.

17. Anlage nach einem der Ansprüche 14 bis 16, dadurch gekennzeichnet, dass der Hydroklassierungsposten (5) ein Hydrozyklon ist.

18. Anlage nach einem der Ansprüche 14 bis 17, dadurch gekennzeichnet, dass sie der Zentrifuge (8) nachgelagert eine Reihe von Ionwechselharzen (9) aufweist, um die helle Lösung (8a) zu bearbeiten.

19. Anlage nach einem der Ansprüche 14 bis 18, dadurch gekennzeichnet, dass sie mindestens einen on-line-Analyseposten zur Auswertung der Verhältnisse Ca + Mg / Si und Fe / Zn umfasst.

20. Anlage nach einem der Ansprüche 14 bis 19, dadurch gekennzeichnet, dass die zweite Postengruppe (10, 11, 13) von oben bis unten mindestens einen Laugungsreaktor (10) des Schlamms (8b) umfasst ; mindestens eine Zentrifuge (11) zum Abtrennung einer hellen Lösung (11a) von einem Schlamm (11b) ; mindestens ein Waschgefäss (13) des Schlamms (11b), um einen gewaschenen Schlamm (11c) zu erhalten.

21. Anlage nach einem der Ansprüche 14 bis 20, dadurch gekennzeichnet, dass sie weiters, der Zentrifuge (11) nachgelagert, mindestens einen Kalkbehandlungsreaktor (12) der hellen Lösung (11a) umfasst ; mindestens einen Zinkpulverbehandlungsreaktor der hellen Fraktion, die nach Reaktion und Filterung aus dem Reaktor (12) kommt ; mindestens einen Pufferbehälter (18), um die gereinigte Lösung aufzunehmen, die nach Reaktion und Filterung aus dem Reaktor (16) kommt.

22. Anlage nach einem der Ansprüche 14 bis 21, dadurch gekennzeichnet, dass sie weiters einen dem Pufferbehälter (18) nachgelagerten Elektrolyser (19) umfasst.

23. Anlage nach einem der Ansprüche 14 bis 22, dadurch gekennzeichnet, dass die dritte Postengruppe mindestens einen Kalzinations-Wirbelbettofen für den gewaschenen Schlamm (11c) umfasst.

24. Anlage nach einem der Ansprüche 14 bis 23, dadurch gekennzeichnet, dass die vierte Postengruppe (20, 21, 22) mindestens einen Säurebehandlungsreaktor (20) des gewaschenen Schlamms (11c) nach der Kalzinierung umfasst ; mindestens eine Zentrifuge (21) zum Abtrennung einer in mindestens einem Puffergefäss (22) gelagerten hellen Lösung (21a) von einem Schlamm (21b).

25. Anlage nach einem der Ansprüche 14 bis 24, dadurch gekennzeichnet, dass die fünfte Postengruppe (30, 31) mindestens einen Neutralisierungsreaktor (30) der im Puffergefäss (22) gelagerten hellen Lösung (21a) durch die im Pufferbehälter (18) gelagerte Lösung umfasst, und mindestens einen Trockenposten (31), um die aus dem Reaktor (30) kommende feste Fraktion zu trocknen.

26. Verwendung von Mineralpigmenten nach Anspruch 13 als Färbungspigmente.

27. Verwendung von Mineralpigmenten nach Anspruch 13 als Zusatzstoffe für Rostschutzfarbe.

**Claims**

1. A process for preparing mineral pigments out of steelworks dusts, notably from electrical plants, characterised in that it comprises the following stages:

   a) the dusts are separated into two fractions, whereas a fraction contains magnetic elements and a fraction contains non-magnetic elements;

b) the said non-magnetic fraction is subjected to a basic lixiviation reaction in order to dissolve the zinc fraction which would not be inserted in the form of spinel, silica, lead, a fraction of the manganese;

c) rinsing until neutralisation and separation of the solid charge thus obtained;

d) calcination at a temperature ranging between 450 and 650°C of the charge thus obtained;

e) treatment of the calcinated charge with sulphuric acid in the presence of a catalyst for dissolving the iron oxides formed during the calcination stage and of the heavy metals other than zinc;

f) collection of the mineral pigments;

g) usage of the solutions derived from c) and e) in order to precipitate other pigments.

2. A process for preparing mineral pigments according to claim 1, characterised in that the dusts are separated into two fractions, respectively magnetic and non-magnetic, while:

- subjecting the dusts to attrition in water;

- classifying hydraulically the charge thus obtained;

- subjecting the finest fraction of the charge, classified hydraulically, to humid phase magnetic separation.

3. A process for preparing mineral pigments according to claim 1 or 2, characterised in that the charge derived from the attrition phase in water is classified hydraulically using a hydrocyclone.

4. A process for preparing mineral pigments according to any of the claims 1 to 3, characterised in that the fraction subjected to humid phase magnetic separation corresponds to a granulometry greater than about 40 micrometers.

5. A process for preparing mineral pigments according to any of the claims 1 to 4, characterised in that the basic lixiviation reaction is performed in the presence of a redox agent.

6. A process for preparing mineral pigments according to claim 5, characterised in that the redox agent is selected among the group formed of oxidising compounds in an alkaline medium.

7. A process for preparing mineral pigments according to claim 5 or 6, characterised in that the redox agent is hydrogen peroxide.

8. A process for preparing mineral pigments according to any of the claims 1 to 7, characterised in that the phase c) is performed using a horizontal spin drier.

9. A process for preparing mineral pigments according to any of the claims 1 to 8, characterised in that the calcination phase is performed in a fluidised bed furnace connected to a disintegrator.

10. A process for preparing mineral pigments according to any of the claims 1 to 9, characterised in that the catalyst used in the sulphuric acid treatment phase is an oxidoreducing compound.

11. A process for preparing mineral pigments according to claim 10, characterised in that the oxidoreducing compound is selected from the group composed of hydrazinium or hydroxylamine hydrochloride derivatives.

12. A process for preparing mineral pigments according to claim 10 or 11, characterised in that the oxidoreducing compound is hydrazine sulphate.

13. Mineral pigments characterised in that they are obtained by implementing the process according to any of the claims 1 to 12.

14. An installation for implementing a process for preparing mineral pigments according to any of the claims 1 to 12, characterised in that it comprises from top to bottom and starting from a steelworks dust inlet section (1), notably from electrical plants:

   - a first set of stations (3, 4, 5, 7, 8) enabling to separate dusts into two fractions, whereas a fraction contains magnetic elements and a fraction contains non-magnetic elements;

   - a second set of stations (10, 11, 13) enabling to subject the said non-magnetic fraction to a basic lixiviation reaction in order to obtain a washed sludge (11c) ;

   - a third set of stations enabling calcination of the washed sludge (11c), leading to a first fraction of pigments;

   - a fourth set of stations (20, 21, 22) enabling acid treatment of the washed sludge (11c) after calcination in order to obtain a clear solution (21a);

   - a fifth set of stations (30, 31) enabling treatment of the clear solution (21a) in order to obtain a second fraction of mineral pigments (32).

15. An installation according to claim 14, characterised in that the first set of stations (3, 4, 5, 7, 8) comprises from top to bottom at least one attrition cell (3) supplied with dusts and producing a pulp which is evacuated towards at least one dilution vessel (4), at least one hydraulic classification station (5) whose overflow (5b) is treated in at least one humid phase magnetic separator (7); at least one centrifuge (8) designed for separating the elements (7b) of the non-magnetic fraction in order to obtain a clear solution (8a) and a sludge (8b).

16. An installation according to claim 14 or 15, characterised in that it comprises two attrition cells (3) operating in parallel.

17. An installation according to any of the claims 14 to 16, characterised in that the hydraulic classification station (5) is a hydrocyclone.

18. An installation according to any of the claims 14 to 17, characterised in that it comprises, downstream of the centrifuge (8) a series of ion exchanging resins (9) in order to treat the clear solution (8a).

19. An installation according to any of the claims 14 to 18, characterised in that it comprises at least one on-line analysis station for assessing the Ca + Mg /Si and Fe/Zn ratios.

20. An installation according to any of the claims 14 to 19, characterised in that the second set of stations (10, 11, 13) comprises from top to bottom at least one lixiviation reactor (10) for the sludge (8b); at least one centrifuge (11) in order to separate a clear solution (11a) from a sludge (11b); at least one washing vessel (13) for the sludge (11b) in order to obtain a washed sludge (11c).

21. An installation according to any of the claims 14 to 20, characterised in that it comprises moreover, downstream of the centrifuge (11), at least one reactor (12) for lime treatment of the clear solution (11a); at least one reactor (16) for zinc powder treatment of the clear fraction from the reactor (12) after reaction and filtration; at least one buffer tub (18) designed for collecting the purified solution from the reactor (16) after reaction and filtration.

22. An installation according to any of the claims 14 to 21, characterised in that it comprises moreover, downstream of the buffer tub (18) an electrolyzer (19).

23. An installation according to any of the claims 14 to 22, characterised in that the third set of stations comprises at least one fluidised bed calcination furnace for the washed sludge (11c).

24. An installation according to any of the claims 14 to 23, characterised in that the fourth set of stations (20, 21, 22) comprises at least one reactor (20) for acid treatment of the washed sludge (11c) after calcination; at least one centrifuge (21) in order to separate a clear solution (21a) stored in at least one buffer vessel (22) of a sludge (21b).

25. An installation according to any of the claims 14 to 24, characterised in that the fifth set of stations (30, 31) comprises at least one reactor (30) for neutralisation of the clear solution (21a) stored in the buffer vessel (22) by the solution stored in the buffer tub (18) and at least one drying station (31) designed for drying the solid fraction from the reactor (30).

26. A usage of mineral pigments according to claim 13 as colouring pigments.

27. A usage of mineral pigments according to claim 13, as additives for anticorrosion paint.

FIG.1

*FIG.2*

FIG.3

FIG.4